# EUROPEAN PATENT APPLICATION

(11) **EP 1 712 129 A1**
(43) Date of publication of application: **18.10.2006**
(21) Application number: 05703833.3
(22) Date of filing: 19.01.2005
(51) Int. Cl.: A01K 97/06, B65H 75/14, B65H 75/28

(54) **SPINNING REEL**

(30) Priority: 04.02.2004 JP 2004028112
(71) Applicant: Kimura, Fujita, Kita-ku Kobe-shi, Hyogo 651-1141 (JP)
(72) Inventor: Kimura, Fujita, Kita-ku Kobe-shi, Hyogo 651-1141 (JP)
(74) Representative: Schildberg, Peter
(86) International application number: PCT/JP2005/000596
(87) International publication number: WO 2005/074679

(57) **Abstract**

This spool 10 is provided with a first spool unit 11, a second spool unit 12, and a support mechanism 13 for supporting the second spool unit 12. The first spool unit 11 is provided with a short cylindrical unit 14, and a fishing line is wound around the short cylindrical unit 14. The second spool unit 12 is provided with a short cylindrical unit 25, and another fishing line is wound around the short cylindrical unit 25. The first spool unit 11 is provided with a support shaft 18, and the second spool unit 12 is provided with a receiver shaft 29. The support mechanism 13 is constituted of the support shaft 18 and the receiver shaft 29. The receiver shaft 29 is coupled to the support shaft 18 so that the second spool unit 12 is housed inside the first spool unit 11. The second spool unit 12 rotates inside the first spool unit 11. The support shaft 18 is provided with a stopper 22 which prevents an unintentional removal of the second spool unit 12 from the first spool unit 11.

## Description

### Technical Field

The present invention relates to a structure of a spool around which a fishing line is to be wound. An angler unwinds a desired amount of the fishing line from the spool as required.

### Background Art

A fishing line is usually sold as being wound around a plastic spool. In general, the spool is provided with a take-up unit which is in the form of a cylinder. The fishing line is wound around the take-up unit. Further, the spool is usually provided with a connection unit for connecting a plurality of spools. The spools are connected in such a fashion that they are aligned along an axial direction of the take-up unit. Such constitution is disclosed in JP-A-2002-153190.

Patent Literature 1: JP-A-2002-153190

In some cases, an angler has to change the fishing line to a fishing line of a different type during fishing. Therefore, an angler takes along a plurality of types of fishing lines. Conventional spools have been structured for the purpose of taking up a single fishing line. Therefore, an angler must take along two spools when she/he takes along two types of fishing lines. That is, the conventional spools have been inconvenient for anglers to take along plural fishing lines.

As described in the foregoing, the conventional spools have the connectable structure. However, the plural spools are simply aligned to be in an integral form when they are connected, which does not mean that they are connected in a compact form. That is, the conventional spools have been inconvenient for anglers even when they are connected to one another.

### Disclosure of the Invention

The present invention has been accomplished in view of the above-described background. An object of this invention is to provide a spool which is compact, capable of taking up a plurality of fishing lines, and convenient for anglers to take along.

(1) In order to attain the above object, the spool according to this invention is provided with a first spool unit having a first short cylindrical unit around whose outer periphery a line is wound and a second spool unit having a second short cylindrical unit around whose outer periphery a line is wound. The second spool unit is disposed inside the first short cylindrical unit in such a fashion that a center of the second short cylindrical unit substantially coincides with a center of the first short cylindrical unit. A support mechanism is provided for supporting the second spool unit in such a fashion that the second short cylindrical unit rotates about the center thereof.

In this invention, since a fishing line is wound around each of the first spool unit and the second spool unit, it is possible to wind plural types of fishing lines around the spool. It is possible for an angler to unwind the plural types of fishing lines from the single spool to use them. Since the second spool unit is housed inside the first spool unit, it is possible for the angler to put the spool in a pocket of clothes that she/he wears in the compact fashion. Since the second short cylindrical unit of the second spool unit rotates about the center thereof, it is possible for the angler to easily unwind the fishing line wound around the second spool unit.

The support mechanism comprises: a support shaft provided in one of the first spool unit and the second spool unit; and a receiver shaft provided in the other one of the first spool unit and the second spool unit to be coupled to the support shaft. With such constitution, a structure of the support mechanism is made simple. A stopper may be provided for preventing the fitting between the support shaft and the receiver shaft from being released. With the stopper, the second spool unit does not come off from the first spool unit unless an angler intentionally detaches the first spool unit from.the second spool unit.

A flange may be formed on one side of the first spool unit and on one side of the second spool unit. Each of the flanges may be provided with a line holder for holding an end of the fishing line. With such constitution, the end of the fishing line is held to prevent the fishing line from being tangled. Further, it is possible for the angler to easily unwind the fishing line from the first spool unit or the second spool unit by pulling the end of the fishing line held by the line holder.

The second spool unit may preferably be provided with a knob to be gripped by the angler. With the knob, it is possible for the angler to hold the spool by gripping the knob. Also, it is possible for the angler to easily take the second spool unit out of the first spool unit by gripping the knob. Further, it is possible for the angler to unwind the fishing line easily from the first spool unit by gripping the knob.

A rib may be formed on the outer periphery of the fist short cylindrical unit or the second short cylindrical unit in a circumferential direction. With the rib, the first short cylindrical unit or the second short cylindrical unit is partitioned into two parts. Therefore, two types of fishing lines are wound around the first short cylindrical unit or the second short cylindrical unit. The rib may preferably be mounted on the outer periphery in a detachable fashion.

(2) In order to attain the above object, a spool according to this invention comprises: a first spool unit having a first short cylindrical unit around whose outer periphery a line is wound, a flange formed on one side of the first short cylindrical unit, and a side member provided detachably on the other side of the short cylindrical unit; and a second spool unit having a second short cylindrical unit around whose outer periphery a line is wound. The second spool unit is disposed inside the first short cylindrical unit in such a fashion that a center of the second short cylindrical unit substantially coincides with a center of the first short cylindrical unit. A support mechanism is provided for supporting the second spool unit in such a fashion that the second short cylindrical unit rotates about the center thereof.

In this invention, since a fishing line is wound around each of the first spool unit and the second spool unit, it is possible to wind plural types of fishing lines around the spool. It is possible for an angler to unwind the plural types of fishing lines from the single spool to use them. Since the second spool unit is housed inside the first spool unit, it is possible for the angler to put the spool in a pocket of clothes that she/he wears in the compact fashion. Since the second short cylindrical unit of the second spool unit rotates about the center thereof, it is possible for the angler to easily unwind the fishing line wound around the second spool unit. By detaching the side member of the first spool unit, it is possible to use the first spool unit as a spare fishing line holder.

The support mechanism comprises: a support shaft provided in one of the first spool unit and the second spool unit; and a receiver shaft provided in the other one of the first spool unit and the second spool unit to be coupled to the support shaft. With such constitution, a structure of the support mechanism is made simple. A stopper may be provided for preventing the fitting between the support shaft and the receiver shaft from being released. With the stopper, the second spool unit does not come off from the first spool unit unless the angler intentionally detaches the first spool unit from the second spool unit.

The flange or the side member may be provided with a line holder for holding an end of the fishing line. With such constitution, the fishing line is free from being tangled since the end of the fishing line is held. Further, it is possible for the angler to easily unwind the fishing line from the first spool unit by pulling the end of the fishing line held by the line holder.

The second spool unit may preferably be provided with a knob to be gripped by the angler. With the knob, it is possible for the angler to hold the spool by gripping the knob. Also, it is possible for the angler to easily take the second spool unit out of the first spool unit by gripping the knob. Further, it is possible for the angler to unwind the fishing line easily from the first spool unit by gripping the knob.

A rib may be formed on the outer periphery of the fist short cylindrical unit or the second short cylindrical unit in a circumferential direction. With the rib, the first short cylindrical unit or the second short cylindrical unit is divided into two parts. Therefore, two types of fishing lines are wound around the first short cylindrical unit or the second short cylindrical unit. The rib may preferably be mounted on the outer periphery in a detachable fashion.

(3) In order to attain the above object, a spool according to this invention comprises: a first spool unit having a first short cylindrical unit around whose outer periphery a line is wound; and a second spool unit having a second short cylindrical unit around whose outer periphery a line is wound, a flange formed on one side of the second short cylindrical unit, and a side member provided detachably on the other side of the short cylindrical unit. The second spool unit is disposed inside the first short cylindrical unit in such a fashion that a center of the second short cylindrical unit substantially coincides with a center of the first short cylindrical unit. A support mechanism is provided for supporting the second spool unit in such a fashion that the second short cylindrical unit rotates about the center thereof.

In this invention, since a fishing line is wound around each of the first spool unit and the second spool unit, it is possible to wind plural types of fishing lines around the spool. It is possible for an angler to unwind the plural types of fishing lines from the single spool to use them. Since the second spool unit is housed inside the first spool unit, it is possible for the angler to put the spool in a pocket of clothes that she/he wears in the compact fashion. Since the second short cylindrical unit of the second spool unit rotates about the center thereof, it is possible for the angler to easily unwind the fishing line wound around the second spool unit. By detaching the side member of the second spool unit, it is possible to use the second spool unit as a spare fishing line holder.

The support mechanism comprises: a support shaft provided in one of the first spool unit and the second spool unit; and a receiver shaft provided in the other one of the first spool unit and the second spool unit to be coupled to the support shaft. With such constitution, a structure of the support mechanism is made simple. A stopper may be provided for preventing the fitting between the support shaft and the receiver shaft from being released. With the stopper, the second spool unit does not come off from the first spool unit unless the angler intentionally detaches the first spool unit from the second spool unit.

The flange or the side member may be provided with a line holder for holding an end of the fishing line. With such constitution, the fishing line is free from being tangled since the end of the fishing line is held. Further, it is possible for the angler to easily unwind the fishing line from the first spool unit by pulling the end of the fishing line held by the line holder.

The second spool unit may preferably be provided with a knob to be gripped by the angler. With the knob, it is possible for the angler to hold the spool by gripping the knob. Also, it is possible for the angler to easily take the second spool unit out of the first spool unit by gripping the knob. Further, it is possible for the angler to unwind the fishing line easily from the first spool unit by gripping the knob.

A rib may be formed on the outer periphery of the fist short cylindrical unit or the second short cylindrical unit in a circumferential direction. With the rib, the first short cylindrical unit or the second short cylindrical unit is divided into two sections. Therefore, two types of fishing lines are wound around the first short cylindrical unit or the second short cylindrical unit. The rib may preferably be mounted on the outer periphery in a detachable fashion.

(4) As described in the foregoing, since the second spool unit is disposed inside the first spool unit, the plural fishing lines are wound around the spool in the compact fashion. As a result, the spool is convenient for anglers to take along.

### Brief Description of the Drawings

[Fig. 1] Fig. 1 is a front view showing a spool according to a first embodiment of this invention.

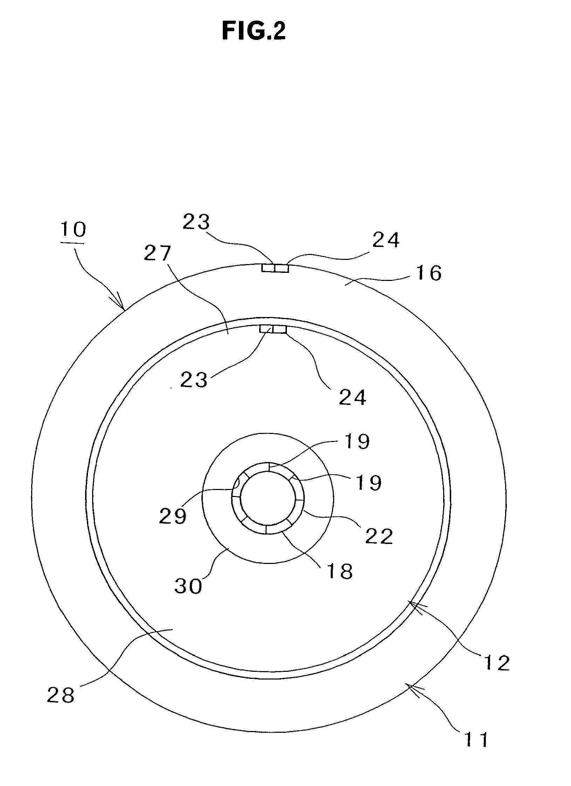

[Fig. 2] Fig. 2 is a right side view showing the spool according to the first embodiment of this invention.
[Fig. 3] Fig. 3 is a left side view showing the spool according to the first embodiment of this invention.
[Fig. 4] Fig. 4 is an enlarged view showing a main part of the spool according to the first embodiment of this invention.
[Fig. 5] Fig. 5 is a diagram showing the spool as viewed from a direction of V of Fig. 4.
[Fig. 6] Fig. 6 is a sectional view showing the spool according to the first embodiment of this invention.
[Fig. 7] Fig. 7 is a sectional view showing a first spool unit of the spool according to the first embodiment of this invention.

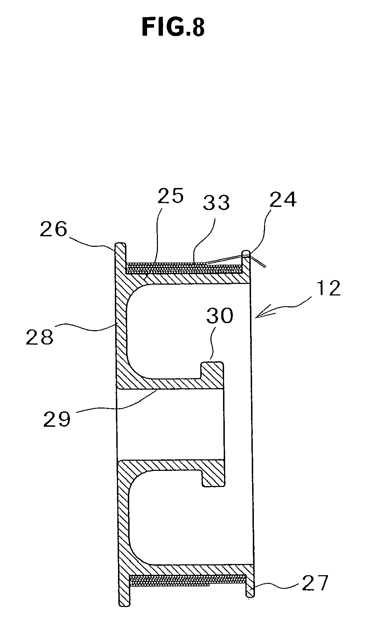

[Fig. 8] Fig. 8 is a sectional view showing a second spool unit of the spool according to the first embodiment of this invention.
[Fig. 9] Fig. 9 is a sectional view showing a spool according to a second embodiment of this invention.
[Fig. 10] Fig. 10 is a sectional view showing a spool according to a third embodiment of this invention.
[Fig. 11] Fig. 11 is a sectional view showing a spool according to a design modification example of the third embodiment of this invention.
[Fig. 12] Fig. 12 is a perspective view showing a rib used for the spool according to the design modification example of the third embodiment of this invention.
[Fig. 13] Fig. 13 is an exploded perspective view showing another rib used for the spool according to the design modification example of the third embodiment of this invention.
[Fig. 14] Fig. 14 is a sectional view showing a spool according to a fourth embodiment of this invention.
[Fig. 15] Fig. 15 is an exploded sectional view showing a spool according to a fifth embodiment of this invention.

### Best Mode for Carrying out the Invention

Hereinafter, this invention will be described in detail referring to the drawings as required and based on preferred embodiments.

### <First Embodiment>

A spool 10 is provided with a first spool unit 11, a second spool unit 12, and a support mechanism 13. The first spool unit 11 has a short cylindrical unit 14 (first short cylindrical unit). A line is wound around an outer periphery of the short cylindrical unit 14. A flange 16 is formed on one side (a first side) of the short cylindrical unit 14, and a side member 15 is provided on the other side (a second side) of the short cylindrical unit 14. The side member 15 has a circular form. An outer diameter of the side member 15 is identical with that of the flange 16. Accordingly, the side member 15 is used also as a flange for the second side of the short cylindrical unit 14.

The side member 15 forms a wall 17 on the second side of the short cylindrical unit 14. A support shaft 18 is formed at the center of the wall 17. The support shaft 18 forms a part of the support mechanism 13. The support shaft 18 is orthogonal to the side member 15 and extends toward the first side of the short cylindrical unit 14. The center of the support shaft 18 coincides with the center of the short cylindrical unit 14.

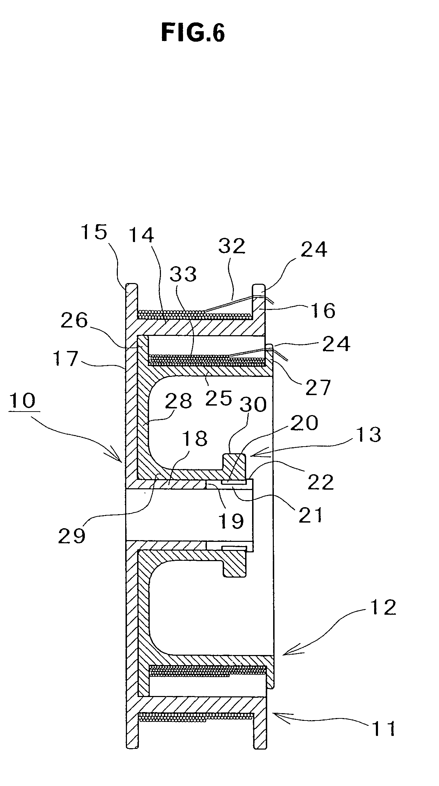

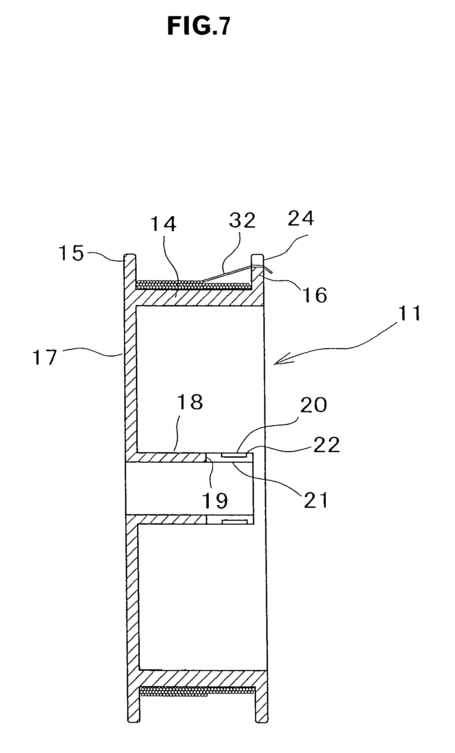

As shown in Figs. 6 and 7, cutout grooves 19 are provided on an end of the support shaft 18. The cutout groves 19 extend in an axial direction of the support shaft 18. In this embodiment, the number of the cutout grooves 19 is eight, and the eight cutout grooves are formed symmetrically along a circumferential direction of the support shaft 18. The cutout grooves 19 allow an elastic deformation of the end of the support shaft 18. An outer diameter of the support shaft 18 changes with the elastic deformation of the end. The number of the cutout grooves 19 is not limited to eight, and a desired number of cutout grooves can be provided so far as the cutout grooves enable the change in outer diameter of the end of the support shaft 18.

A groove 20 is provided at the end of the support shaft 18. The groove 20 extends in the circumferential direction of the support shaft 18. Thanks to the groove 20, a thin wall 21 is formed at the end of the support shaft 18. An outer diameter of an end of the thin wall 21 is a little larger than that of other parts. The end of the thin wall 21 constitutes a stopper 22 described later in this specification.

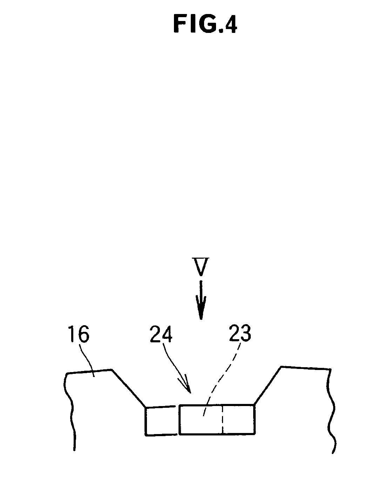

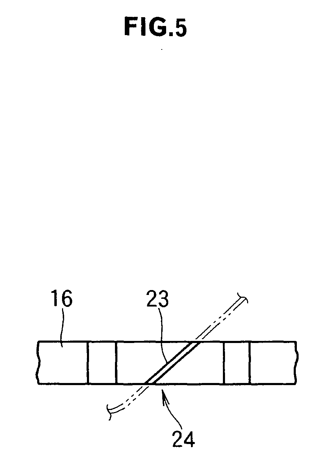

As shown in Figs. 4 and 5, a line holder 24 is provided at an outer rim of the flange 16. The line holder 24 has a slit 23 provided on the outer rim of the flange 16. An end of a fishing line is inserted into the slit 23 to be held by the line holder 24. Though one line holder 24 is formed in this embodiment, a plurality of line holders 24 may be provided.

The second spool unit 12 has such a size that the second spool unit 12 is housed inside the short cylindrical unit 14 of the first spool unit 11. The second spool unit 12 has a short cylindrical unit 25 (second short cylindrical unit). A fishing line is wound around an outer periphery of the short cylindrical unit 25. A flange 27 is formed on one side (a first side) of the short cylindrical unit 25, and a side member 26 is provided on the other side (a second side) of the short cylindrical unit 25. The side member 26 has a circular form. The side member 26 is used also as a flange for the second side of the short cylindrical unit 25. In this embodiment, an outer diameter of the flange 27 is a little smaller than that of the side member 26. Accordingly, the fishing line passes between the first spool unit 11 and the second spool unit 12 to be unwound from the second spool unit 12. The flange 27 is provided with a line holder 24. The line holder 24 has a structure similar to that of the line holder 24 provided in the first spool unit 11.

The side member 26 forms a wall 28 on the second side of the short cylindrical unit 25. A receiver shaft 29 is formed at the center of the wall 28. The receiver shaft 29 forms a part of the support mechanism 13. The receiver shaft 29 is orthogonal to the side member 26 and extends toward the first side of the short cylindrical unit 25. The receiver shaft 29 has a cylindrical shape, and an inner diameter of the receiver shaft 29 corresponds to the outer diameter of the support shaft 18. The center of the receiver shaft 29 coincides with the center of the short cylindrical unit 25.

As shown in Fig. 6, the support shaft 18 is inserted into the receiver shaft 29. Thus, the second spool unit 12 is disposed inside the first spool unit 11. A length of the receiver shaft 29 is less than that of the support shaft 18. An outer diameter of an end of the receiver shaft 29 is a little larger than that of other parts. The end of the receiver shaft 29 forms a knob 30. In a state where the support shaft 18 is fitted into the receiver shaft 29, an end face of the receiver shaft 29 (i.e. an end face of the knob 30) contacts the stopper 22 of the support shaft 18.

The support mechanism 13 is constituted of the support shaft 18 and the receiver shaft 29. The outer diameter of the support shaft 18 and the inner diameter of the receiver shaft 29 are set to predetermined values. Therefore, the receiver shaft 29 is relatively rotatable with respect to the support shaft 18. Also, since the stopper 22 forms a small step, the second spool unit 12 does not come off from the first spool unit 11 unless an angler intentionally detaches the first spool unit 11 from the second spool unit 12.

When the second spool unit 12 is pulled in a direction in which the second spool unit 12 is detached from the first spool unit 11 in a state where the receiver shaft 29 is coupled to the support shaft 18, the support shaft 18 is bent in a radially inner direction since the cutout grooves 19 are provided on the support shaft 18. Accordingly, the contact of the receiver shaft 29 with the stopper 22 is released to enable the support shaft 18 to be withdrawn from the receiver shaft 29. Thus, the second spool unit 12 is separated from the first spool unit 11. When the receiver shaft 29 is coupled to the support shaft 18, the second spool unit 12 is coupled to the first spool unit 11 to be held with a predetermined holding power.

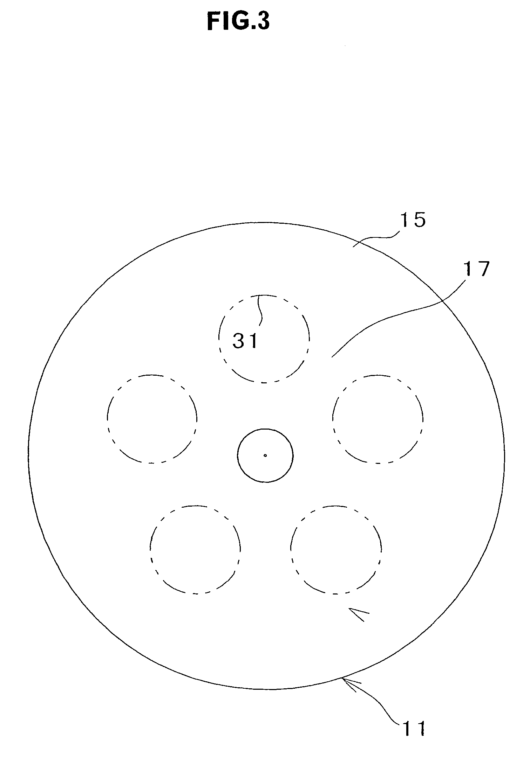

Each of the first spool unit 11 and the second spool unit 12 is formed from a resin or a metal such as aluminum. As shown in Fig. 3, a circular opening 31 may be formed on the wall 17 of the end member 15. The circular opening 31 makes it possible to achieve a weight saving and material saving of the first spool unit 11.

In the spool 10 according to this embodiment, fishing lines 32 and 33 varying in type are separately wound around the short cylindrical unit 14 of the first spool unit 11 and the short cylindrical unit 25 of the second spool unit 12. It is possible for an angler to take along the spool 10 around which the plural types of fishing lines are wound as described above. When using the fishing line 32 or 33, the angler pulls an end of the fishing line 32 (33) to let the fishing line 32 (33) off from the line holder 24 and then pulls the fishing line 32 (33) again. Thus, the angler can unwind a desired amount of the fishing line 32 (33).

When the angler unwinds the fishing line 32 from the first spool unit 11, she/he grips the knob 30 with one hand to hold the spool 10 and pulls the fishing line 32 with the other hand. Thus, the first spool unit 11 rotates relatively with respect to the second spool unit 12 to feed the fishing line 32. When the angler unwinds the fishing line 33 from the second spool unit 12, she/he holds the first spool unit 11 with one hand and pulls the fishing line 33 with the other hand. Thus, the second spool unit 12 rotates relatively with respect to the first spool unit 11 to feed the fishing line 33. After unwinding the fishing lines 32 and 33, the angler hitches the fishing lines 32 and 33 to the line holders 24 to cut the fishing lines 32 and 33.

Since the spool 10 is provided with the first spool unit 11 and the second spool unit 12, and since the second spool unit 12 is disposed inside the first spool unit 11, the single spool 10 has a function equivalent to two spools. Therefore, an angler can put the two spools in a pocket of clothes that she/he wears in the case of fishing in the compact fashion. This spool 10 is conveniently portable for anglers. Also, since the fist spool unit 11 and the second spool unit 12 are relatively rotatable with respect to each other, each of the fishing lines 32 and 33 can be unwound smoothly and is free from twist. Further, thanks to the stopper 22, the second spool unit 12 does not come off from the first spool unit 11. Thus, the spool 10 has an improved user-friendliness.

### <Second Embodiment>

Hereinafter, a second embodiment of this invention will be described.

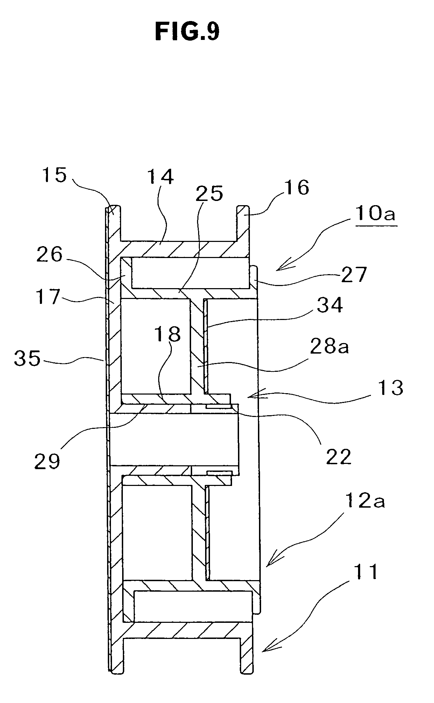

As shown in Fig. 9, a spool 10a according to the second embodiment of this invention differs from the spool 10 according to the first embodiment in the following points. In the spool 10 according to the first embodiment, the side member 26 provided in the second spool unit 12 forms the wall 28 as well as serves as the flange. In contrast, in the spool 10a according to this embodiment, a wall 28a is disposed on a substantially center of the second short cylindrical unit 25 and forms a labeling surface. Other parts of constitution of this embodiment are the same as those of the spool 10.

A label 34 indicating a specification of the fishing line 33 is attached on the wall 28a. The side member 15 of the first spool unit 11 also serves as a labeling surface. A label 35 indicating the specification of the fishing line 33 is attached on the side member 15. With the thus-attached labels 34 and 35, an angler easily confirms the specifications of the fishing lines 32 and 33 wound around the spool 10a. In addition, a mark indicating a brand can be displayed on the labels 34 and 35.

### <Third Embodiment>

Hereinafter, a third embodiment of this invention will be described.

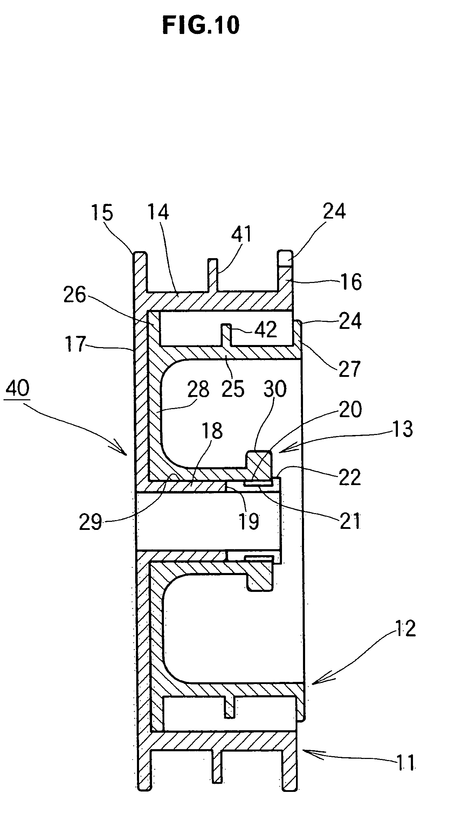

Referring to Fig. 10, a spool 40 according to the third embodiment of this invention differs from the spool 10 according to the first embodiment in that ribs 41 and 42 are formed on the short cylindrical unit 14 of the first spool unit 11 and the short cylindrical unit 25 of the second spool unit 12. Other parts of constitution of this embodiment are the same as those of the spool 10.

The rib 41 is formed integrally with the short cylindrical unit 14. The rib 41 is provided in such a fashion as to project from the outer periphery of the short cylindrical unit 14 in a radial direction. The rib 41 is in the form of a circular ring and extends in the circumferential direction of the outer periphery. Though the rib 41 is provided at the center of the short cylindrical unit 14 in this embodiment, a position of the rib 41 is not particularly limited.

Likewise, the rib 42 is formed integrally with the short cylindrical unit 25. The rib 42 is provided in such a fashion as to project from the outer periphery of the short cylindrical unit 25 in a radial direction. The rib 42 is in the form of a circular ring and extends in the circumferential direction of the outer periphery of the short cylindrical unit 25. Though the rib 42 is provided at the center of the short cylindrical unit 25 in this embodiment, a position of the rib 42 is not particularly limited.

Since the ribs 41 and 42 are thus provided, each of the short cylindrical unit 14 and the short cylindrical unit 25 is partitioned into two parts. Accordingly, two types of fishing lines are wound around each of the short cylindrical units 14 and 25. Therefore, the four types of fishing lines are wound around the spool 40 according to this invention. Thus, it is possible for an angler to take along the plural types of fishing lines held in the more compact fashion.

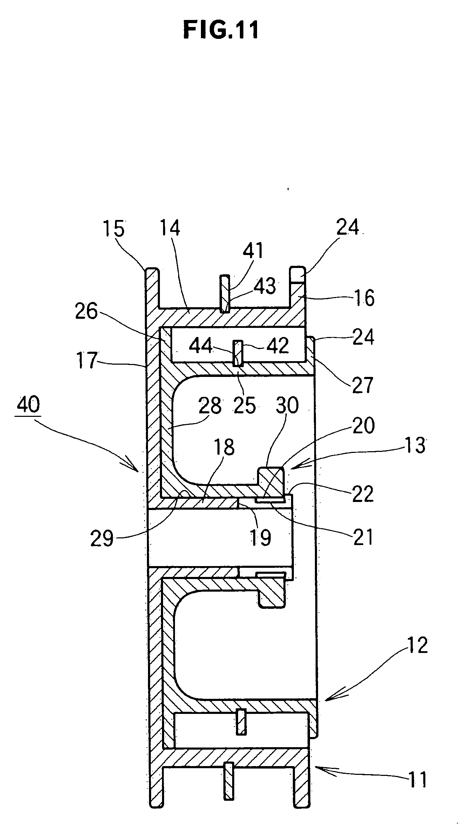

As shown in Figs. 11 to 13, the ribs 41 and 42 may be detachably mounted on the short cylindrical units 14 and 25. In this case, the ribs 41 and 42 are fitted into grooves 43 and 44, respectively, the grooves being provided on the short cylindrical units 14 and 25, respectively. The grooves 43 and 44 are circularly formed along the outer peripheries of the short cylindrical units 14 and 25. A width of each of the grooves 43 and 44 corresponds to a thickness of each of the ribs 41 and 42. Therefore, the ribs 41 and 42 are reliably fitted into the grooves 43 and 44.

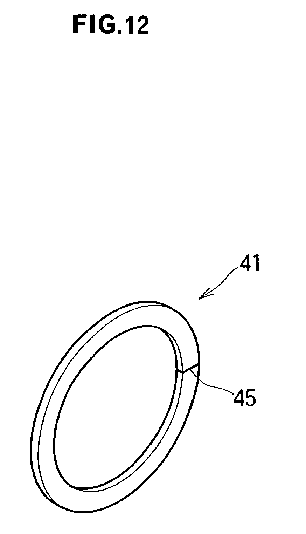

As shown in Fig. 12, the rib 41 is cut at a section 45. By the cutting, the rib 41 elastically deforms in the radial direction. Therefore, the rib 41 is attached/detached to/from the short cylindrical unit 14 when deformed in the radial deformation. The rib 42 has the same structure.

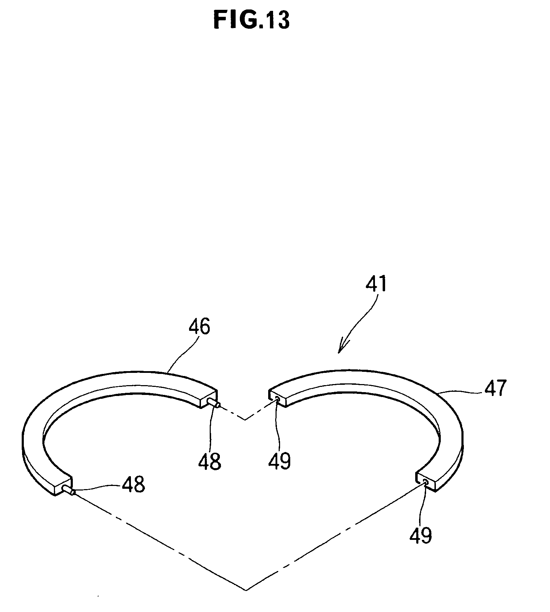

As shown in Fig. 13, the rib 41 may be divided in two parts. In this case, the rib 41 has a pair of rib pieces 46 and 47. A claw 48 is formed on the rib piece 46, and a depression 49 is formed on the rib piece 47. The claw 48 is fitted into the depression 49 to couple the rib pieces 46 and 27 to each other, thereby forming the rib 41. The rib 41 is brought into a state of being attached to the short cylindrical unit 14 when the rib pieces 46 and 47 sandwich the short cylindrical unit 14 therebetween. In addition, the rib 42 may have the same structure.

### <Fourth Embodiment>

Hereinafter, a fourth embodiment of this invention will be described.

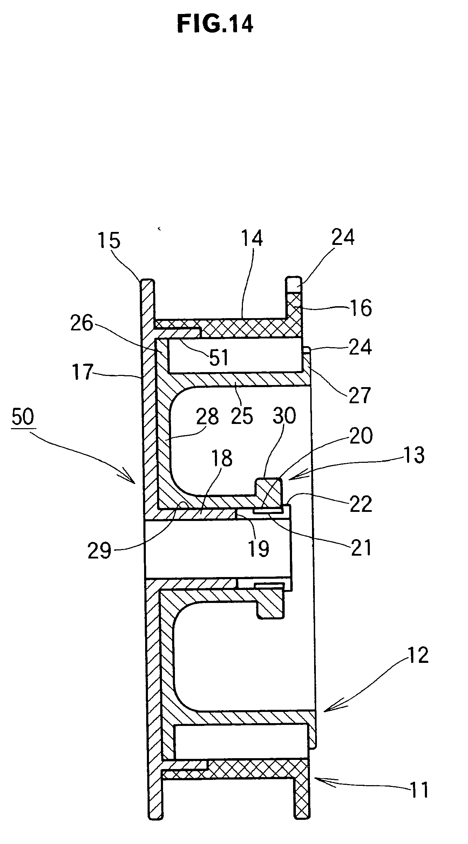

Referring to Fig. 14, a spool 50 according to the fourth embodiment of this invention differs from the spool 10 according to the first embodiment in that the side member 15 of the short cylindrical unit 14 of the first spool unit 11 is detachably mounted on the short cylindrical unit 14. Other parts of constitution of this embodiment are the same as those of the spool 10.

As shown in Fig. 14, the side member 15 of the first spool unit 11 is fitted into the short cylindrical unit 14. The side member 15 is provided with a fitting cylinder 51 extending in an axial direction of the support shaft 18. A mail screw is formed on an outer periphery of the fitting cylinder 51. A female screw is formed on an inner wall of the short cylindrical unit 14. The fitting cylinder 51 is screwed into the short cylindrical unit 14, so that the side member 15 is fixed to the short cylindrical unit 14.

The side member 15 is provided detachably in the short cylindrical unit 14. Hence, the spool 50 is used as a holder of a spare fishing line. More specifically, when the fishing line wound around the first spool unit 11 is used up, the side member 15 is detached to attach the spare fishing line to the short cylindrical unit 14. The side member 15 is attached again to the short cylindrical unit 14 after the attachment of the spare fishing line, so that the spare fishing line is reliably retained in the spool 50. Thus, since the spool 50 according to this embodiment is used as the spare fishing line holder, it is possible to effectively reuse the spool 50 which has been treated as a waste. As a result of the reuse, it is possible to suppress waste production and to achieve resource saving.

In this embodiment, the side member 15 of the first spool unit 11 is provided detachably in the short cylindrical unit 14. The side member 26 of the second spool unit 12 may also be provided detachably in the short cylindrical unit 25. Also, though the side member 15 is screwed into the short cylindrical unit 14 to be fixed to the short cylindrical unit 14, the fixing structure is not limitative. For instance, by setting an outer diameter of the fitting cylinder 51 of the side member 15 and an inner diameter of the short cylindrical unit 14 to predetermined values, it is possible to reliably fix the side member 15 to the short cylindrical unit 14 only by fitting the fitting cylinder 51 into the short cylindrical unit 14.

### <Fifth Embodiment>

Hereinafter, a fifth embodiment of this invention will be described.

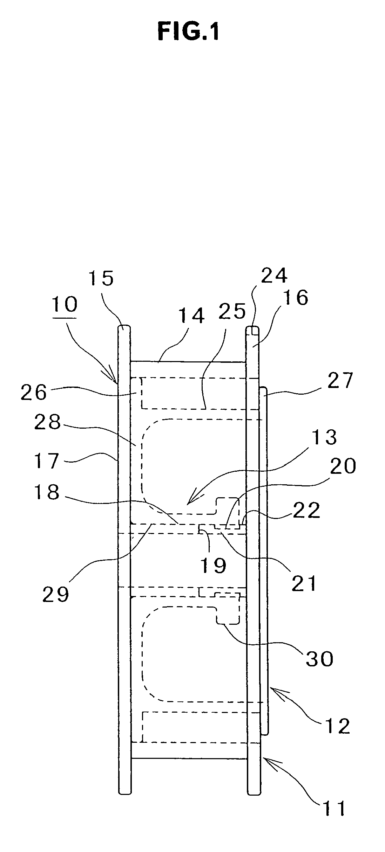

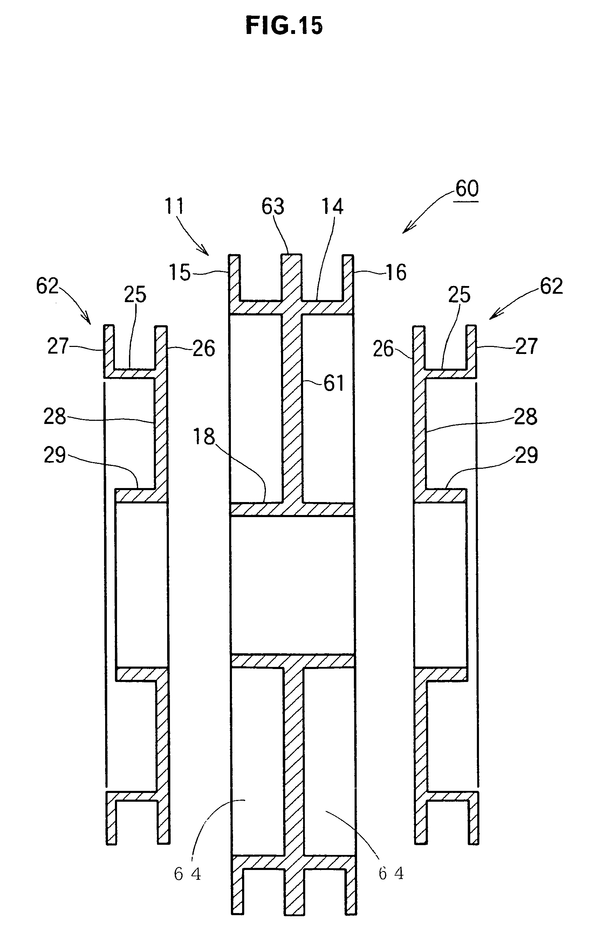

As shown in Fig. 15, a spool 60 according to the fifth embodiment of this invention differs from the spool 10 according to the first embodiment in the following points. In the spool 10 according to the first embodiment, the side member 15 provided in the first spool unit 11 forms the wall 17 as well as serves as the flange (see Fig. 1). In contrast, in the spool 60 according to this embodiment, (a) a wall 61 is disposed at the center of the short cylindrical unit 14; (b) two second spool units 62 are disposed on either side of the wall 61; and (c) a rib 63 is formed on the short cylindrical unit 14. Other parts of constitution of this embodiment are the same as those of the spool 10.

Thanks to the wall 61 disposed on the above-described position, housings 64 for housing the second spool units 62 are formed on either side of the wall 61. Each of the housings 64 is defined by the wall 61, the short cylindrical unit 14, and the support shaft 18.

The rib 63 is formed integrally with the short cylindrical unit 14. The rib 63 is provided in such a fashion as to project from the outer periphery of the short cylindrical unit 14 in the radial direction. The rib 63 is in the form of a circular ring and extends in the circumferential direction of the outer periphery. In this embodiment, the rib 63 is provided at the center of the short cylindrical unit 14. The position of the rib 63 is not limitative. Thanks to the rib 63, the short cylindrical unit 14 is partitioned into two parts, thereby enabling two types of fishing lines to be wound around the short cylindrical unit 14. Therefore, the spool 60 of this embodiment can take up four types of fishing lines, and an angler can take along the plural types of fishing lines held in the more compact fashion.

A rib may be provided on the short cylindrical unit 25 of the second spool unit 62 in this embodiment in the same fashion as in the third embodiment. In this case, this spool 60 can hold six types of fishing lines. The rib 63 may be detachably mounted on the short cylindrical unit 14. In this case, the rib 63 may have the structure of being cut at a section as shown in Fig. 12 or may be divided into two parts as shown in Fig. 13.

An inner diameter of the receiver shaft 29 of the second spool unit 62 corresponds to an outer diameter of the support shaft 18 of the first spool unit 11. The second spool unit 62 is housed inside the first spool unit 11 in a state where the second spool unit 62 is coupled to the support shaft 18 to be retained with a predetermined retention force. In this case, too, the second spool unit 62 is rotatable about the support shaft 18. Reasonably, the cutout grooves 19 and the stopper 22 may be provided at the end of the support shaft 18 in this embodiment in the same fashion as in the first embodiment. Also, though the knob is not provided on the second spool unit 62 in this embodiment, the knob 30 may be provided at the end of the receiver shaft 29 of the second spool unit 62 in the same fashion as in the first embodiment.

Also, the side member 26 of the second spool unit 62 may be detachable from the short cylindrical unit 25 in this embodiment, too. In this case, the structure described in the fourth embodiment wherein the side member 26 is screwed into the short cylindrical unit 25 may be employed. Likewise, the flange 16 and the side member 15 of the first spool unit 11 may be detachable from the short cylindrical unit 14.

With the spool 60 according to this embodiment, it is possible to take up four to six types of fishing lines. Therefore, this embodiment has an advantage that an angler can keep plural types of fishing lines in the spool in the remarkably compact fashion.

## Claims

1. A spool comprising:
a first spool unit having a first short cylindrical unit around whose outer periphery a fishing line is wound;
a second spool unit having a second short cylindrical unit around whose outer periphery a fishing line is wound, the second spool unit being disposed inside the first short cylindrical unit in such a fashion that a center of the second short cylindrical unit substantially coincides with a center of the first short cylindrical unit; and
a support mechanism for supporting the second spool unit in such a fashion that the second short cylindrical unit rotates about the center thereof.

2. The spool according to claim 1, wherein
the support mechanism comprises:
a support shaft provided in one of the first spool unit and the second spool unit; and
a receiver shaft provided in the other one of the first spool unit and the second spool unit to be coupled to the support shaft.

3. The spool according to claim 2, wherein
the spool further comprises a stopper for preventing the fitting between the support shaft and the receiver shaft from being released.

4. The spool according to claim 1, wherein
a flange is formed on one side of the first spool unit and on one side of the second spool unit, and each of the flanges is provided with a line holder for holding an end of the fishing line.

5. The spool according to claim 1, wherein the second spool unit comprises a knob to be gripped by an angler.

6. The spool according to claim 1, wherein a rib is formed on the outer periphery of the fist short cylindrical unit or the second short cylindrical unit along a circumferential direction.

7. The spool according to claim 6, wherein the rib is mounted on the outer periphery in a detachable fashion.

8. A spool comprising:
a first spool unit having a first short cylindrical unit around whose outer periphery a fishing line is wound, a flange formed on one side of the first short cylindrical unit, and a side member provided detachably on the other side of the first short cylindrical unit;
a second spool unit having a second short cylindrical unit around whose outer periphery a fishing line is wound, the second spool unit being disposed inside the first short cylindrical unit in such a fashion that a center of the second short cylindrical unit substantially coincides with a center of the first short cylindrical unit; and
a support mechanism for supporting the second spool unit in such a fashion that the second short cylindrical unit rotates about the center thereof.

9. The spool according to claim 8, wherein
the support mechanism comprises:
a support shaft provided in one of the first spool unit and the second spool unit; and
a receiver shaft provided in the other one of the first spool unit and the second spool unit to be coupled to the support shaft.

10. The spool according to claim 9, wherein
the spool further comprises a stopper for preventing the fitting between the support shaft and the receiver shaft from being released.

11. The spool according to claim 8, wherein
the flange or the side member is provided with a line holder for holding an end of the fishing line.

12. The spool according to claim 8, wherein the second spool unit comprises a knob to be gripped by an angler.

13. The spool according to claim 8, wherein a rib is formed on the outer periphery of the fist short cylindrical unit or the second short cylindrical unit along a circumferential direction.

14. The spool according to claim 13, wherein the rib is mounted on the outer periphery in a detachable fashion.

15. A spool comprising:
a first spool unit having a first short cylindrical unit around whose outer periphery a fishing line is wound;
a second spool unit having a second short cylindrical unit around whose outer periphery a fishing line is wound, a flange formed on one side of the second short cylindrical unit, and a side member provided detachably on the other side of the second short cylindrical unit, the second spool unit being disposed inside the first short cylindrical unit in such a fashion that a center of the second short cylindrical unit substantially coincides with a center of the first short cylindrical unit; and
a support mechanism for supporting the second spool unit in such a fashion that the second short cylindrical unit rotates about the center thereof.

16. The spool according to claim 15, wherein
the support mechanism comprises:
a support shaft provided in one of the first spool unit and the second spool unit; and
a receiver shaft provided in the other one of the first spool unit and the second spool unit to be coupled to the support shaft.

17. The spool according to claim 16, wherein
the spool further comprises a stopper for preventing the fitting between the support shaft and the receiver shaft from being released.

18. The spool according to claim 15, wherein
the flange or the side member is provided with a line holder for holding an end of the fishing line.

19. The spool according to claim 15, wherein the second spool unit comprises a knob to be gripped by an angler.

20. The spool according to claim 15, wherein a rib is formed on the outer periphery of the fist short cylindrical unit or the second short cylindrical unit along a circumferential direction.

21. The spool according to claim 20, wherein the rib is mounted on the outer periphery in a detachable fashion.
